(19) Europäisches Patentamt
European Patent Office
Office européen des brevets

(11) EP 4 664 204 A1

(12) **EUROPEAN PATENT APPLICATION**

(43) Date of publication:
**17.12.2025 Bulletin 2025/51**

(21) Application number: **25159582.3**

(22) Date of filing: **24.02.2025**

(51) International Patent Classification (IPC):
***G03G 15/16*** *(2006.01)*

(52) Cooperative Patent Classification (CPC):
**G03G 15/162**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.06.2024 JP 2024096081**

(71) Applicant: **FUJIFILM Business Innovation Corp.**
**Minato-ku**
**Tokyo (JP)**

(72) Inventors:
- **ROKUTAN, Minoru**
  **Ebina-shi, Kanagawa (JP)**
- **FURUKAWA, Masato**
  **Ebina-shi, Kanagawa (JP)**
- **KUBO, Yosuke**
  **Ebina-shi, Kanagawa (JP)**

(74) Representative: **Becker Kurig & Partner**
**Patentanwälte mbB**
**Bavariastraße 7**
**80336 München (DE)**

(54) **ENDLESS BELT, INTERMEDIATE TRANSFER BELT, TRANSFER DEVICE, AND IMAGE FORMING APPARATUS**

(57) An endless belt includes a binder resin, at least one modified silicone oil of a modified silicone oil having a benzene ring or a polyether-modified silicone oil, and an epoxide derivative.

FIG. 1

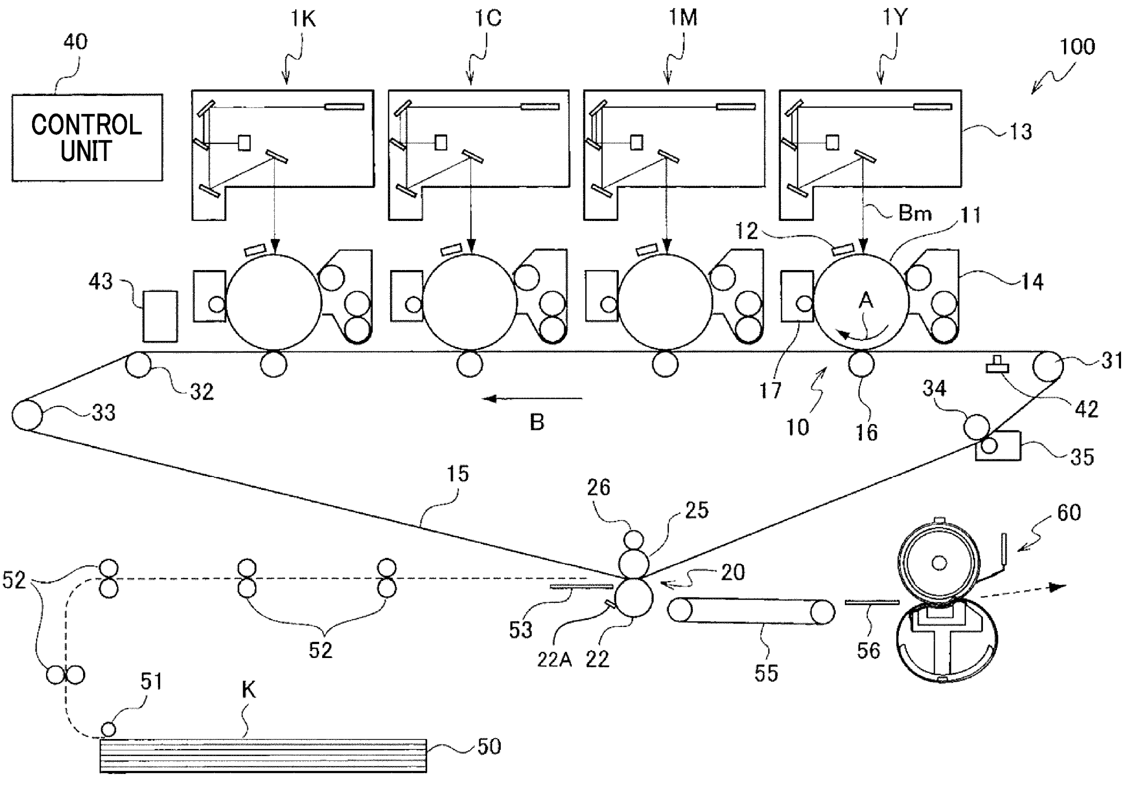


EP 4 664 204 A1

## Description

BACKGROUND OF THE INVENTION

(i) Field of the Invention

The present invention relates to an endless belt, an intermediate transfer belt, a transfer device, and an image forming apparatus.

(ii) Description of Related Art

In an image forming apparatus (such as a copy machine, a facsimile machine, or a printer) using an electrophotographic method, a toner image formed on the surface of an image holder is transferred to the surface of a recording medium and fixed on the recording medium such that an image is formed.

For example, JP2015-090454A discloses "a charging member including a conductive elastic layer, and a conductive surface layer that is provided on the conductive elastic layer, is in contact with an image holder, and contains a resin, porous resin particles whose content is 3 parts by mass or more and 25 parts by mass or less with respect to 100 parts by mass of the resin, and a silicone oil whose content is 0.1 parts by mass or more and 10 parts by mass or less with respect to 100 parts by mass of the resin".

In addition, JP2017-061701A discloses "a coating film including a coat layer formed by applying and curing a coating composition containing an active energy ray curable compound, silica nanoparticles having an average particle diameter of 2 to 300 nm, organic fine particles, and a leveling agent, in which a content of the silica nanoparticles is 10 to 280 parts by mass with respect to 100 parts by mass of the active energy ray curable compound, a content of the organic fine particles is 0.1 to 2 parts by mass with respect to 100 parts by mass of the active energy ray curable compound, and a content of the leveling agent is 0.007 to 0.5 parts by mass with respect to 100 parts by mass of a total amount of the active energy ray curable compound and the silica nanoparticles".

In addition, JP2012-068558A discloses "an endless belt formed by including a resin layer containing a polyamide-imide resin and a silicone surfactant and having an outer surface on which a cleaning blade is pressed".

SUMMARY OF THE INVENTION

An object of the present invention is to provide an endless belt having a small number of air bubbles and a reduced peeling force on a surface, as compared with an endless belt including a binder resin, at least one modified silicone oil of a modified silicone oil having a benzene ring or a polyether-modified silicone oil, and a methacrylic-modified silicone oil as an antifoaming agent.

Means for addressing the problems include the following aspects.

<1> According to a first aspect of the present disclosure, there is provided an endless belt including: a binder resin; at least one modified silicone oil of a modified silicone oil having a benzene ring or a polyether-modified silicone oil; and an epoxide derivative.

<2> According to a second aspect of the present disclosure, there is provided the endless belt according to <1>, in which a content of the modified silicone oil with respect to 100 parts by mass of the binder resin is 0.5 parts by mass or more and 6.0 parts by mass or less.

<3> According to a third aspect of the present disclosure, there is provided the endless belt according to <2>, in which the content of the modified silicone oil with respect to 100 parts by mass of the binder resin is 1.0 parts by mass or more and 4.0 parts by mass or less.

<4> According to a fourth aspect of the present disclosure, there is provided the endless belt according to any one of <1> to <3>, in which a content of the epoxide derivative with respect to the modified silicone oil is 3% by mass or more and 20% by mass or less.

<5> According to a fifth aspect of the present disclosure, there is provided the endless belt according to <4>, in which the content of the epoxide derivative with respect to the modified silicone oil is 5% by mass or more and 15% by mass or less.

<6> According to a sixth aspect of the present disclosure, there is provided the endless belt according to any one of <1> to <5>, in which the epoxide derivative is an epoxy-modified silicone oil.

<7> According to a seventh aspect of the present disclosure, there is provided the endless belt according to any one of <1> to <6>, in which, when air is blown to an outer peripheral surface while increasing a blowing pressure from an upper side of the outer peripheral surface after polyester resin particles having a volume average particle diameter of 4.7 μm are caused to adhere to the outer peripheral surface at a load of 0 $g/cm^2$, all the polyester resin particles that

have adhered to the outer peripheral surface are separated from the outer peripheral surface in a case where the blowing pressure is within 16 kPa.

<8> According to an eighth aspect of the present disclosure, there is provided an intermediate transfer belt including: the endless belt according to any one of <1> to <7>.

<9> According to a ninth aspect of the present disclosure, there is provide a transfer device including: an intermediate transfer belt that is an intermediate transfer belt having an outer peripheral surface to which a toner image is transferred, and has the endless belt according to any one of <1> to <7>; a primary transfer device that has a primary transfer member performing primary transfer of a toner image formed on a surface of an image holder to the outer peripheral surface of the intermediate transfer belt; and a secondary transfer device that has a secondary transfer member which is arranged in contact with the outer peripheral surface of the intermediate transfer belt and performs secondary transfer of the toner image transferred to the outer peripheral surface of the intermediate transfer belt to a surface of a recording medium.

<10> According to a tenth aspect of the present disclosure, there is provide an image forming apparatus including: a toner image forming device that has an image holder and forms a toner image on a surface of the image holder; and the transfer device according to <9> that is a transfer device transferring the toner image formed on the surface of the image holder to a surface of a recording medium.

According to <1>, an endless belt having a small number of air bubbles and a reduced peeling force on the surface is provided as compared with an endless belt including a binder resin, at least one modified silicone oil of a modified silicone oil having a benzene ring or a polyether-modified silicone oil, and a methacrylic-modified silicone oil as an antifoaming agent.

According to <2>, the endless belt having a small number of bubbles and a reduced peeling force on the surface is provided as compared with a case where the content of the modified silicone oil with respect to 100 parts by mass of the binder resin is less than 0.5 parts by mass or more than 6.0 parts by mass.

According to <3>, the endless belt having a small number of air bubbles and a reduced peeling force on the surface is provided as compared with a case where the content of the modified silicone oil with respect to 100 parts by mass of the binder resin is less than 1.0 parts by mass or more than 4.0 parts by mass.

According to <4>, the endless belt having a small number of air bubbles and a reduced peeling force on the surface is provided as compared with a case where the content of the epoxide derivative with respect to the modified silicone oil is less than 3% by mass or more than 20% by mass.

According to <5>, the endless belt having a small number of bubbles and a reduced peeling force on the surface is provided as compared with a case where the content of the epoxide derivative with respect to the modified silicone oil is less than 5% by mass or more than 15% by mass.

According to <6>, an endless belt including an epoxy-modified silicone oil as the epoxide derivative and having a small number of air bubbles and a reduced peeling force on the surface is provided as compared with an endless belt including a binder resin, at least one modified silicone oil of a modified silicone oil having a benzene ring or a polyether-modified silicone oil, and a methacrylic-modified silicone oil as an antifoaming agent.

According to <7>, the endless belt having a small number of bubbles and a reduced peeling force on the surface is provided as compared with a case where all the polyester resin particles that have adhered to the outer peripheral surface are separated from the outer peripheral surface in a case where the blowing pressure is more than 6 kPa.

According to <8>, <9>, or <10>, an intermediate transfer belt having a small number of air bubbles and excellent transferability, or a transfer device or an image forming apparatus including the intermediate transfer belt is provided as compared with a case where an endless belt including a binder resin, at least one modified silicone oil of a modified silicone oil having a benzene ring or a polyether-modified silicone oil, and a methacrylic-modified silicone oil as an antifoaming agent is applied.

## BRIEF DESCRIPTION OF THE DRAWINGS

Exemplary embodiment(s) of the present invention will be described in detail based on the following figures, wherein:

Fig. 1 is a view schematically showing the configuration of an example of an image forming apparatus according to the present exemplary embodiment; and

Fig. 2 is a schematic configuration view showing the periphery of a secondary transfer portion in another example of the image forming apparatus according to the present exemplary embodiment.

DETAILED DESCRIPTION OF THE INVENTION

Hereinafter, the present exemplary embodiment as an example of the present invention will be described. The following descriptions and examples merely illustrate the exemplary embodiments, and do not limit the scope of the exemplary embodiments.

Regarding the ranges of numerical values described in stages in the present exemplary embodiment, the upper limit value or lower limit value described in one range of numerical values may be replaced with the upper limit value or lower limit value of another range of numerical values described in stages. In addition, regarding the ranges of numerical values described in the present exemplary embodiment, the upper limit value or lower limit value of a range of numerical values may be replaced with values described in examples.

In the present exemplary embodiment, the term "step" includes not only an independent step but also a step that cannot be clearly distinguished from other steps but can achieve the expected object thereof.

In the present exemplary embodiment, in a case where an exemplary embodiment is described with reference to drawings, the configuration of the exemplary embodiment is not limited to the configuration shown in the drawings. In addition, the sizes of members in each drawing are conceptual and a relative relationship between the sizes of the members is not limited thereto.

In the present exemplary embodiment, each component may include two or more kinds of corresponding substances. In a case where the amount of each component in a composition is mentioned in the present exemplary embodiment, and there are two or more kinds of substances corresponding to each component in the composition, unless otherwise specified, the amount of each component means the total amount of two or more kinds of the substances present in the composition.

[Endless Belt]

An endless belt according to the present exemplary embodiment includes a binder resin, at least one modified silicone oil of a modified silicone oil having a benzene ring or a polyether-modified silicone oil, and an epoxide derivative.

The endless belt according to the present exemplary embodiment has a small number of air bubbles and a reduced peeling force on the surface due to the above-described configuration. A reason therefor is presumed as follows.

In the related art, there is a technique of applying a modified silicone oil having a benzene ring or a polyether-modified silicone oil as a silicone oil for the purpose of reducing the peeling force on the surface of the endless belt. The more these silicone oils are used, the more the function of reducing the peeling force on the surface of the endless belt is exhibited.

However, air bubbles may be generated during the preparation of the endless belt (that is, during the film formation), and it is difficult to sufficiently reduce the peeling force on the surface of the endless belt.

Therefore, in the endless belt according to the present exemplary embodiment, at least one modified silicone oil of a modified silicone oil having a benzene ring or a polyether-modified silicone oil, and an epoxide derivative are used in combination. As a result, during the preparation of the endless belt (that is, during the film formation), air bubbles are less likely to be generated, and the peeling force of the surface of the endless belt can be sufficiently reduced.

This is because it is considered as follows. The epoxy group of the epoxide derivative exhibits a function of reducing interfacial tension at the interface between the binder resin and the modified silicone oil in the coating liquid. As a result, the methyl group of the silicone side chain of the modified silicone oil sufficiently reduces the surface energy while the formation of air bubbles is suppressed.

Therefore, it is presumed that the endless belt according to the present exemplary embodiment is an endless belt having a small number of air bubbles and a reduced peeling force on the surface.

In addition, since the peeling force of the surface of the endless belt according to the present exemplary embodiment is reduced, the adhesion of the toner is low, and the cleaning property of the toner is high in a case where the endless belt is applied to a member for an image forming apparatus. In particular, in a case where the endless belt according to the present exemplary embodiment is applied to the intermediate transfer belt, the intermediate transfer belt having excellent transferability is obtained.

Hereinafter, the details of the endless belt according to the present exemplary embodiment will be described.

(Composition)

The endless belt according to the present exemplary embodiment includes a binder resin, a modified silicone oil, and an epoxide derivative. Specifically, for example, the endless belt consists of a single layer composed of a resin layer containing a modified silicone oil and an epoxide derivative.

In particular, the endless belt (the resin layer constituting the endless belt) may contain conductive particles and other known components as necessary.

-Binder Resin-

Examples of the binder resin include a polyimide resin (PI resin), a polyamide-imide resin (PAI resin), an aromatic polyether ketone resin (for example, an aromatic polyether ether ketone resin or the like), a polyphenylene sulfide resin (PPS resin), and a polyetherimide resin (PEI resin), a polyester resin, a polyamide resin, a polycarbonate resin, and the like.

From the viewpoint of improving bending resistance, the binder resin is, for example, preferably a polyimide-based resin (that is, a resin containing a constitutional unit having an imide bond), more preferably a polyimide resin or a polyamide-imide resin, and even more preferably a polyimide resin.

Examples of the polyimide resin include an imidization product of polyamic acid (polyimide resin precursor) which is a polymer of a tetracarboxylic dianhydride and a diamine compound.

Examples of the polyimide resin include a resin having a constitutional unit represented by General Formula (I).

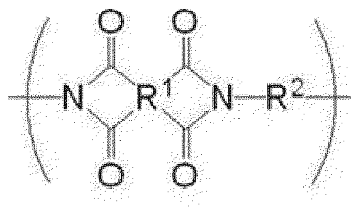

General Formula (I)

In General Formula (I), $R^1$ represents a tetravalent organic group, and $R^2$ represents a divalent organic group.

Examples of the tetravalent organic group represented by $R^1$ include an aromatic group, an aliphatic group, a cyclic aliphatic group, a group obtained by combining an aromatic group and an aliphatic group, and a group obtained by the substitution of these groups. Specific examples of the tetravalent organic group include a residue of a tetracarboxylic dianhydride which will be described later.

Examples of the divalent organic group represented by $R^2$ include an aromatic group, an aliphatic group, a cyclic aliphatic group, a group obtained by combining an aromatic group and an aliphatic group, and a group obtained by the substitution of these groups. Specific examples of the divalent organic group include a residue of a diamine compound which will be described later.

Specifically, examples of the tetracarboxylic dianhydride used as a raw material of the polyimide resin include pyromellitic dianhydride, 3,3',4,4'-benzophenone tetracarboxylic dianhydride, 3,3',4,4'-biphenyltetracarboxylic dianhydride, 2,3,3',4-biphenyltetracarboxylic dianhydride, 2,3,6,7-naphthalenetetracarboxylic dianhydride, 1,2,5,6-naphthalenetetracarboxylic dianhydride, 1,4,5,8-naphthalenetetracarboxylic dianhydride, 2,2'-bis(3,4-dicarboxyphenyl)sulfonic dianhydride, perylene-3,4,9,10-tetracarboxylic dianhydride, bis(3,4-dicarboxyphenyl)ether dianhydride, and thylenetetracarboxylic dianhydride.

Specific examples of the diamine compound used as a raw material of the polyimide resin include 4,4'-diaminodiphenyl ether, 4,4'-diaminodiphenylmethane, 3,3'-diaminodiphenylmethane, 3,3'-dichlorobenzidine, 4,4'-diaminodiphenylsulfide, 3,3'-diaminodiphenylsulfone, 1,5-diaminonaphthalene, m-phenylenediamine, p-phenylenediamine, 3,3'-dimethyl 4,4'-biphenyldiamine, benzidine, 3,3'-dimethylbenzidine, 3,3'-dimethoxybenzidine, 4,4'-diaminodiphenylsulfone, 4,4'-diaminodiphenylpropane, 2,4-bis(β-amino tert-butyl)toluene, bis(p-β-amino-tert-butylphenyl)ether, bis(p-β-methyl-δ-aminophenyl)benzene, bis-p-(1,1-dimethyl-5-amino-pentyl) benzene, 1-isopropyl-2,4-m-phenylenediamine, m-xylylene diamine, p-xylylene diamine, di(p-aminocyclohexyl)methane, hexamethylenediamine, heptamethylenediamine, octamethylenediamine, nonamethylenediamine, decamethylenediamine, diaminopropyltetradiamine, 3-methylheptamethylenediamine, 4,4-dimethylheptamethylenediamine, 2,11-diaminododecane, 1,2-bis-3-aminopropoxyethane, 2,2-dimethylpropylenediamine, 3-methoxyhexamethylenediamine, 2,5-dimethylheptamethylenediamine, 3-methylheptamethylenediamine, 5-methylnonamethylenediamine, 2,17-diaminoeicosadecane, 1,4-diaminocyclohexane, 1,10-diamino-1,10-dimethyldecane, 12-diaminooctadecane, 2,2-bis[4-(4-aminophenoxy)phenyl]propane, piperazine, $H_2N(CH_2)_3O(CH_2)_2O(CH_2)NH_2$, $H_2N(CH_2)_3S(CH_2)_3NH_2$, $H_2N(CH_2)_3N(CH_3)_2(CH_2)_3NH_2$, and the like.

Examples of the polyamide-imide resin include a resin having an imide bond and an amide bond in a repeating unit.

More specifically, examples of the polyamide-imide resin include a polymer of a trivalent carboxylic acid compound (also called a tricarboxylic acid) having an acid anhydride group and a diisocyanate compound or a diamine compound.

As the tricarboxylic acid, for example, a trimellitic acid anhydride and a derivative thereof are preferable. In addition to the tricarboxylic acid, a tetracarboxylic dianhydride, an aliphatic dicarboxylic acid, an aromatic dicarboxylic

acid, or the like may also be used.

Examples of the diisocyanate compound include 3,3'-dimethylbiphenyl-4,4'-diisocyanate, 2,2'-dimethylbiphenyl-4,4'-diisocyanate, biphenyl-4,4'-diisocyanate, biphenyl-3,3'-diisocyanate, biphenyl-3,4'-diisocyanate, 3,3'-diethylbiphenyl-4,4'-diisocyanate, 2,2'-diethylbiphenyl-4,4'-diisocyanate, 3,3'-dimethoxybiphenyl-4,4'-diisocyanate, 2,2'-dimethoxybiphenyl-4,4'-diisocyanate, naphthalene-1,5-diisocyanate, and naphthalene-2,6-diisocyanate.

Examples of the diamine compound include a compound that has the same structure as the aforementioned isocyanate and has an amino group instead of an isocyanato group.

Here, the content of the resin with respect to the endless belt (the resin layer constituting the endless belt) is, for example, preferably 60% by mass or more and 95% by mass or less, more preferably 70% by mass or more and 95% by mass or less, and still more preferably 75% by mass or more and 90% by mass or less.

-Modified Silicone Oil-

As the modified silicone oil, at least one of a modified silicone oil having a benzene ring or a polyether-modified silicone oil is applied.

Examples of the modified silicone oil having a benzene ring include an aralkyl-modified silicone oil having an aralkyl group in at least one of a side chain or a terminal of a polysiloxane chain.

Examples of the alkyl group in the aralkyl group include a linear or branched alkyl group having 1 or more and 4 or less carbon atoms.

Examples of the aryl group in the aralkyl group include a phenyl group.

Examples of the aralkyl group include a benzyl group, a 1-phenylethyl group, a 2-phenylethyl group, and a 2-methyl-2-phenylethyl group.

Examples of the polyether-modified silicone oil include a silicone oil having a polyoxyalkylene group in at least one of a side chain or a terminal of a polysiloxane chain.

Examples of the oxyalkylene unit in the polyoxyalkylene group include oxyethylene and oxypropylene. In addition, the number of repetitions of the oxyalkylene unit is, for example, preferably 6 or more and 20 or less and more preferably 10 or more and 16 or less.

From the viewpoint of reducing the peeling force, the HLB of the modified silicone oil is, for example, preferably 2 or more and 14 or less, and more preferably 4 or more and 10 or less.

HLB indicates a hydrophilic group/hydrophobic group balance "Hydrophile-Lipophile Balance". The HLB is a value calculated by the following equation defined by the following Griffin method.

$$\text{Equation: HLB} = 20 \times (\text{total formula weight of hydrophilic portion/molecular weight})$$

The content of the modified silicone oil with respect to 100 parts by mass of the binder resin is, for example, 0.3 parts by mass or more and 8.0 parts by mass or less, and is, for example, preferably 0.5 parts by mass or more and 6.0 parts by mass or less, and more preferably 1.0 parts by mass or more and 4.0 parts by mass or less.

In a case where the content of the modified silicone oil is 0.5 parts by mass or more, the peeling force of the endless belt surface can be sufficiently reduced.

In a case where the content of the modified silicone oil is 6.0 parts by mass or less, the generation of air bubbles can be particularly suppressed.

-Epoxide Derivative-

The epoxide derivative is a compound having a oxacyclopropane having a 3-membered ring in the structure.

As the epoxide derivative, for example, an epoxy-modified silicone oil is preferable from the viewpoint of suppressing the generation of air bubbles and reducing the peeling force of the endless belt surface.

Examples of the epoxy-modified silicone oil include a silicone oil having an -RX group in at least one of a side chain or a terminal of a polysiloxane chain.

Here, R represents an alkyl group, and X represents an epoxy group.

Examples of the alkyl group include an alkyl group having 1 or more and 12 or less carbon atoms. The alkyl group may be substituted with a substituent such as a hydroxyl group or a carboxyl group, or an ether bond having an oxygen atom in a carbon-carbon bond may be interposed.

The epoxy group also includes an alicyclic epoxy group. Examples of the alicyclic epoxy group include a group in which an epoxy group is formed by two carbon atoms and an oxygen atom constituting an alicyclic hydrocarbon skeleton having a 5- or more and 8- or less-membered ring. Specific examples of the alicyclic epoxy group include an epoxycyclohexyl group.

Examples of the epoxide derivative include 1,2-butylene oxide, 1,2-octylene oxide, cyclooctene oxide, 1,2-epoxypropane, butyl glycidyl ether, diglycidyl ether, and epoxy acrylate, in addition to the epoxy-modified silicone oil.

The content of the epoxide derivative with respect to the modified silicone oil is, for example, 1% by mass or more and 25% by mass or less, and is, for example, preferably 3% by mass or more and 20% by mass or less, and more preferably 5% by mass or more and 15% by mass or less.

**In** a case where the content of the epoxide derivative is within the above-described range, the generation of air bubbles can be particularly suppressed.

-Conductive Particles-

Examples of the conductive particles include conductive powders (for example, powders having a volume resistivity of less than $10^7$ Ω·cm, the same applies hereinafter) and semi-conductive powders (for example, powders having a volume resistivity of $10^7$ Ω·cm or more and $10^{13}$ Ω·cm or less, the same applies hereinafter).

Specifically, examples of the conductive particles include conductive carbon particles and metal oxide particles.

Examples of the conductive carbon particles include carbon black.

Examples of the carbon black include Ketjen black, oil furnace black, channel black, and acetylene black. As the carbon black, carbon black having undergone a surface treatment (hereinafter, also called "surface-treated carbon black") may be used.

The surface-treated carbon black is obtained by adding, for example, a carboxy group, a quinone group, a lactone group, a hydroxy group, or the like to the surface of carbon black. Examples of the surface treatment method include an air oxidation method of reacting carbon black by bringing the carbon black into contact with air in a high temperature atmosphere, a method of reacting carbon black with nitrogen oxide or ozone at room temperature (for example, 22°C), and a method of oxidizing carbon black with air in a high temperature atmosphere and then with ozone at a low temperature.

Examples of the metal oxide particles include tin oxide particles, titanium oxide particles, zinc oxide particles, zirconium oxide particles, and the like.

Examples of the conductive particles include metal particles (for example, aluminum particles, nickel particles, and the like), ionic conductive particles (for example, potassium titanate particles, LiCl particles, and the like), and the like.

Among these, from the viewpoint of improving electrical characteristics, for example, carbon black is preferable as the conductive particles.

The average primary particle diameter of the conductive particles is, for example, preferably 2 nm or more and 40 nm or less, more preferably 8 nm or more and 20 nm or less, and even more preferably 10 nm or more and 15 nm or less.

The method of measuring the average primary particle diameter of the conductive particles is as follows.

First, by a microtome, a measurement sample having a thickness of 100 nm is collected from the endless belt (the resin layer constituting the endless belt) and observed with a transmission electron microscope (TEM). Then, the diameters of circles each having an area equivalent to the projected area of each of 50 primary particles of the conductive particles (that is, equivalent circle diameters) are adopted as particle diameters, and the average value thereof are adopted as the average primary particle diameter of the conductive particles.

The content of the conductive particles is, for example, preferably 10% by mass or more and 50% by mass or less, more preferably 12% by mass or more and 40% by mass or less, and preferably 15% by mass or more and 30% by mass or less with respect to the endless belt (the resin layer constituting the endless belt).

-Other Components-

Examples of other components include a filler for improving mechanical strength, an antioxidant for preventing thermal deterioration of a belt, a surfactant for improving fluidity, a heat-resistant antioxidant, and the like.

**In** a case where the other components are included, the content of the other components is, for example, preferably more than 0% by mass and 10% by mass or less, more preferably more than 0% by mass and 5% by mass or less, and still more preferably more than 0% by mass and 1% by mass or less with respect to the endless belt (the resin layer constituting the endless belt).

(Thickness of Endless Belt)

The thickness of the endless belt (the resin layer constituting the endless belt) according to the present exemplary embodiment is, for example, preferably 60 μm or more and 120 μm or less, and more preferably 60 μm or more and 110 μm or less.

The thickness of the endless belt is measured as follows.

That is, a cross section of the endless belt taken along the thickness direction is observed with an optical microscope or a scanning electron microscope, the thickness of the endless belt as a measurement target is measured at

10 sites, and the average value thereof is adopted as the thickness.

(Adhesion Characteristics of Endless Belt)

For example, it is preferable that the endless belt according to the present exemplary embodiment has characteristics in which, when air is blown to the outer peripheral surface from the upper side of the outer peripheral surface while increasing a blowing pressure after polyester resin particles having a volume average particle diameter of 4.7 μm are caused to adhere to the outer peripheral surface at a load of 0 g/cm$^2$, all the polyester resin particles that have adhered to the outer peripheral surface are separated from the outer peripheral surface in a case where the blowing pressure is within 16 kPa (hereinafter, the requirement will be referred to as an "adhesion characteristics").

In a case where the blowing pressure is within 16 kPa in the adhesion characteristics, an endless belt having a sufficiently reduced peeling force on the surface is obtained.

From the viewpoint of reducing the peeling force, for example, the blowing pressure is more preferably within 12 kPa and still more preferably within 10 kPa.

Whether or not the adhesion characteristics are satisfied is determined as follows.

First, from a target endless belt, a quadrangle test piece having a size 3 cm × 4 cm is collected.

Then, in an environment at 22°C and 15% RH, a voltage of 10 kV is applied to a surface of the test piece, the surface corresponding to the outer peripheral surface of the endless belt, from 15 cm above the surface in a direction parallel to the surface corresponding to the outer peripheral surface of the endless belt. In this state, polyester resin particles are scattered on the aforementioned surface and caused to adhere to the surface in an application amount of 3 g/cm$^2$. The polyester resin particles are scattered from 10 cm or less above the surface corresponding to the outer peripheral surface of the endless belt such that the polyester resin particles free-fall by the weight thereof. The polyester resin particles are caused to adhere to the surface corresponding to the outer peripheral surface of the endless belt under a load of 0 g/cm$^2$.

The polyester resin particles are polycondensates of dimethyl fumarate as a dicarboxylic acid and propylene glycol as a dialcohol. As the polyester resin particles, resin particles having a weight average molecular weight of 25,000 and a volume average particle diameter of 4.7 μm are used.

As the polyester resin particles, polyester resin particles are adopted which substantially do not come into frictional contact with each other or with other members (such as a carrier) and substantially do not experience triboelectrification. Specifically, as the polyester resin particles, resin particles are adopted which have been stored for half a year in an environment at a temperature of 10°C or higher and 22°C or lower and a humidity of 10% RH or higher and 55% RH or lower after being manufactured.

Next, from an air blowing port having a diameter of 0.7 mm placed 3 cm above the central portion of the surface of the test piece to which the polyester resin particles have adhered, air is started to be blown in the central portion at a blowing pressure of 0.1 kPa, and the blowing pressure is increased at 0.5 kPa/sec.

In a case where all the polyester resin particles are separated from the test piece when the blowing pressure has reached 16 kPa, it is determined that the adhesion characteristics are satisfied.

On the other hand, in a case where the polyester resin particles remain on the test piece even at a blowing pressure of more than 16 kPa, it is determined that the adhesion characteristics are not satisfied.

The weight average molecular weight of the polyester resin particles is measured by gel permeation chromatography (GPC). By GPC, the molecular weight is measured using GPC·HLC-8120GPC manufactured by Tosoh Corporation as a measurement device, TSKgel Super HM-M (15 cm) manufactured by Tosoh Corporation as a column, and THF as a solvent. The weight average molecular weight and the number average molecular weight are calculated using a molecular weight calibration curve plotted using a monodisperse polystyrene standard sample from the measurement results.

The volume average particle diameter of the polyester resin particles is measured using COULTER MULTISIZER II (manufactured by Beckman Coulter Inc.) and using ISOTON-II (manufactured by Beckman Coulter Inc.) as an electrolytic solution.

For measurement, a measurement sample in an amount of 0.5 mg or more and 50 mg or less is added to 2 ml of a 5% aqueous solution of a surfactant (for example, preferably sodium alkylbenzene sulfonate) as a dispersant. The obtained solution is added to an electrolytic solution in a volume of 100 ml or more and 150 ml or less.

The electrolytic solution in which the sample is suspended is subjected to a dispersion treatment for 1 minute with an ultrasonic disperser, and the particle size distribution of particles having a particle diameter in a range of 2 μm or more and 60 μm or less is measured using COULTER MULTISIZER II with an aperture having an aperture size of 100 μm. The number of particles to be sampled is 4,000.

For the particle size ranges (channels) divided based on the measured particle size distribution, a cumulative volume distribution is drawn from small-sized particles. The particle diameter at which the cumulative percentage of the particles reaches 50% is defined as a volume average particle diameter D50v.

(Method of Manufacturing Endless Belt)

The method of manufacturing an endless belt according to the present exemplary embodiment includes, for example, a step of applying a resin solution containing a resin or a precursor thereof, a modified silicone oil, and an epoxide derivative onto a surface of a mold to form a coating film,

a step of heating and drying the coating film and, as necessary, reacting the precursor (for example, imidization in a case where the precursor is a polyimide resin precursor) to form a resin film, and
a step of removing the resin film from the mold.

The resin film removed from the mold is adopted as an endless belt.
Although the mold is not particularly limited, a cylindrical mold is preferably used. The substrate may be a metal substrate. Instead of the metal mold, molds made of other materials such as a resin, glass, and ceramics may also be used. Furthermore, a glass coat, a ceramic coat, or the like may be provided on the surface of the mold, or the mold may be coated with a silicone-based or fluorine-based release agent.
Examples of the method of applying the resin solution include the usual methods such as a blade coating method, a wire bar coating method, a spray coating method, a dip coating method, a bead coating method, an air knife coating method, and a curtain coating method.

(Use of Endless Belt)

The endless belt according to the present exemplary embodiment can be used as, for example, an endless belt for an electrophotographic image forming apparatus. Examples of the endless belt for the electrophotographic image forming apparatus include an intermediate transfer belt, a transfer belt (that is, a recording medium transport belt), a fixing belt (such as a heating belt or a pressure belt), a transport belt (that is, a recording medium transport belt), and the like.
The endless belt according to the present exemplary embodiment can also be used, for example, as a belt-like member, such as a transport belt, a driving belt, a laminated belt, an electric insulating material, a pipe coating material, an electromagnetic wave insulating material, a heat source insulator, or an electromagnetic wave absorbent film, in addition to the endless belt for an image forming apparatus.
Depending on the use, the endless belt according to the present exemplary embodiment may include a functional layer provided on the inner peripheral surface side. However, the endless belt according to the present exemplary embodiment may be applied, for example, as a layer constituting the outer peripheral surface.

[Transfer Device]

The transfer device according to the present exemplary embodiment includes an intermediate transfer belt that has an outer peripheral surface to which a toner image is to be transferred, a primary transfer device that has a primary transfer member performing primary transfer of a toner image formed on a surface of an image holder to the outer peripheral surface of the intermediate transfer belt, and a secondary transfer device that has a secondary transfer member which is arranged in contact with the outer peripheral surface of the intermediate transfer belt and performs secondary transfer of the toner image transferred to the outer peripheral surface of the intermediate transfer belt to a surface of a recording medium.
As the intermediate transfer belt, an intermediate transfer belt having the endless belt according to the present exemplary embodiment is used.
The transfer device according to the present exemplary embodiment may include a known device such as a cleaning device having a cleaning member that cleans the outer peripheral surface of the intermediate transfer belt.

(Intermediate Transfer Belt)

The intermediate transfer belt has the aforementioned endless belt according to the present exemplary embodiment.
The intermediate transfer belt may be a single layer composed of the endless belt or may be a laminate in which the endless belt is provided on a substrate layer as a release layer.

-Volume Resistivity of Intermediate Transfer Belt-

The common logarithm of the volume resistivity that the intermediate transfer belt has in a case where a voltage of 100 V is applied thereto for 10 seconds is, for example, 8.0 (logΩ·cm) or more and 13.5 (logΩ·cm) or less, and more

preferably 8.5 (logΩ·cm) or more and 13.2 (logΩ·cm) or less.

The volume resistivity that the intermediate transfer belt has in a case where a voltage of 500 V is applied thereto for 10 seconds is measured by the following method.

By using a microammeter (R8430A manufactured by ADVANTEST CORPORATION) as a resistance meter and a UR probe (manufactured by Mitsubishi Chemical Analytech Co., Ltd.) as a probe, the volume resistivity (logΩ·cm) is measured at a total of 18 spots in the intermediate transfer belt, 6 spots at equal intervals in the circumferential direction and 3 spots in the central portions and both end portions in the width direction, at a voltage of 500 V under a pressure of 1 kgf for a voltage application time of 10 seconds, and the average value thereof is calculated. The surface resistivity is measured in an environment of a temperature of 22°C and a humidity of 55% RH.

(Surface Resistivity of Intermediate Transfer Belt)

The common logarithm of the surface resistivity that the intermediate transfer belt has in a case where a voltage of 100 V is applied to the outer peripheral surface thereof for 10 seconds is, for example, preferably 9.5 (logQ/suq.) or more 15.0 (logQ/suq.) or less, more preferably 10.5 (logQ/suq.) or more and 14.0 (logΩ/suq.) or less, and particularly preferably 11.0 (logQ/suq.) or more and 13.5 (logQ/suq.) or less.

The unit logQ/sq. of the surface resistivity represents the surface resistivity using the logarithmic value of the resistance value per unit area, which is also written as log(Ω/sq.), logQ/square, logΩ/□, or the like.

The surface resistivity that the intermediate transfer belt has in a case where a voltage of 100 V is applied to the outer peripheral surface thereof for 10 seconds is measured by the following method.

By using a microammeter (R8430A manufactured by ADVANTEST CORPORATION) as a resistance meter and a UR probe (manufactured by Mitsubishi Chemical Analytech Co., Ltd.) as a probe, the surface resistivity (logQ/suq.) of the outer peripheral surface of the endless belt is measured at a total of 18 spots within the outer peripheral surface of the intermediate transfer belt, 6 spots at equal intervals in the circumferential direction and 3 spots in the central portions and both end portions in the width direction, at a voltage of 500 V under a pressure of 1 kgf for a voltage application time of 10 seconds, and the average thereof is calculated. The surface resistivity is measured in an environment of a temperature of 22°C and a humidity of 55% RH.

(Primary Transfer Device)

In the primary transfer device, the primary transfer member is arranged to face the image holder across the intermediate transfer belt. In the primary transfer device, by the primary transfer member, a voltage with polarity opposite to charging polarity of a toner is applied to the intermediate transfer belt, such that primary transfer of a toner image to the outer peripheral surface of the intermediate transfer belt is performed.

(Secondary Transfer Device)

In the secondary transfer device, the secondary transfer member is arranged on a toner image-holding side of the intermediate transfer belt. The secondary transfer device includes, for example, a secondary transfer member and a back surface member that is arranged on the side opposite to the toner image-holding side of the intermediate transfer belt. In the secondary transfer device, the intermediate transfer belt and the recording medium are interposed between the secondary transfer member and the back surface member, and a transfer electric field is formed. In this way, secondary transfer of the toner image formed on the intermediate transfer belt to the recording medium is performed.

The secondary transfer member may be a secondary transfer roll or a secondary transfer belt. As the back surface member, for example, a back roll is used.

(Cleaning Device)

In the cleaning device, the cleaning member is arranged on a toner image-holding side of the intermediate transfer belt. The cleaning device includes, for example, the cleaning member and a back surface member that is arranged on the side opposite to the toner image-holding side of the intermediate transfer belt. In the cleaning device, for example, in a state where the intermediate transfer belt is interposed between the cleaning member and the back surface member, the cleaning member cleans the outer peripheral surface of the intermediate transfer belt.

Examples of the cleaning member include a cleaning blade and a cleaning brush.

The transfer device according to the present exemplary embodiment may be a transfer device that transfers a toner image to the surface of a recording medium via a plurality of intermediate transfer bodies. That is, the transfer device may be, for example, a transfer device in which a toner image is primarily transferred to a first intermediate transfer body from an image holder, the toner image is secondarily transferred to a second intermediate transfer body from the first

intermediate transfer body, and then the toner image is tertiarily transferred to a recording medium from the second intermediate transfer body.

As at least one of the plurality of intermediate transfer bodies of the transfer device, the intermediate transfer belt having the aforementioned endless belt according to the present exemplary embodiment is used.

[Image Forming Apparatus]

The image forming apparatus according to the present exemplary embodiment includes a toner image forming device that forms a toner image on a surface of an image holder and a transfer device that transfers the toner image formed on the surface of the image holder to a surface of a recording medium. As the transfer device, the transfer device according to the present exemplary embodiment described above is used.

Examples of the toner image forming device include a device including an image holder, a charging device that charges the surface of the image holder, an electrostatic latent image forming device that forms an electrostatic latent image on the charged surface of the image holder, and a developing device that develops the electrostatic latent image formed on the surface of the image holder with a developer containing a toner to form a toner image.

As the image forming apparatus according to the present exemplary embodiment, known image forming apparatuses are used which include an apparatus including a fixing device that fixes a toner image transferred to the surface of a recording medium; an apparatus including a cleaning device that cleans the surface of an image holder not yet being charged after transfer of a toner image; an apparatus including an electricity removing device that removes electricity by irradiating the surface of an image holder, the image holder not yet being charged, with electricity removing light after transfer of a toner image; an apparatus including an image holder heating member that raises the temperature of an image holder so as to reduce relative temperature, and the like.

The image forming apparatus according to the present exemplary embodiment may be any of a dry development-type image forming apparatus or a wet development-type (development type using a liquid developer) image forming apparatus.

In the image forming apparatus according to the present exemplary embodiment, for example, a portion including the image holder may be a cartridge structure (process cartridge) detachable from the image forming apparatus. As the process cartridge, for example, a process cartridge including a toner image forming device and a transfer device is preferably used.

Hereinafter, an example of the image forming apparatus according to the present exemplary embodiment will be described with reference to drawings. Here, the image forming apparatus according to the present exemplary embodiment is not limited thereto. Hereinafter, among the parts shown in the drawing, main parts will be described, and others will not be described.

(Image Forming Apparatus)

Fig. 1 is a schematic configuration view showing the configuration of the image forming apparatus according to the present exemplary embodiment.

As shown in Fig. 1, an image forming apparatus 100 according to the present exemplary embodiment is, for example, an intermediate transfer-type image forming apparatus that is generally called a tandem type, and includes a plurality of image forming units 1Y, 1M, 1C, and 1K (an example of a toner image forming device) in which a toner image of each color component is formed by an electrophotographic method, a primary transfer portion 10 that performs sequential transfer (primary transfer) of the toner image of each color component formed by each of the image forming units 1Y, 1M, 1C, and 1K to an intermediate transfer belt 15, a secondary transfer portion 20 that performs batch transfer (secondary transfer) of the overlapped toner images transferred to the intermediate transfer belt 15 to paper K as a recording medium, and a fixing device 60 that fixes the images transferred by the secondary transfer on the paper K. The image forming apparatus 100 also has a control unit 40 that controls the operation of each device (each portion).

Each of the image forming units 1Y, 1M, 1C, and 1K of the image forming apparatus 100 includes a photoreceptor 11 (an example of an image holder) that holds the toner image formed on the surface thereof and rotates in the direction of an arrow A.

Around the photoreceptor 11, there are provided a charger 12 for charging the photoreceptor 11 as an example of charging means and a laser exposure machine 13 for drawing an electrostatic latent image on the photoreceptor 11 as an example of an electrostatic latent image forming device (in the figure, the exposure beam is represented by a mark Bm).

Around the photoreceptor 11, as an example of developing means, there are provided a developing machine 14 that accommodates toners of each color component and makes the electrostatic charge image on the photoreceptor 11 into a visible image by using the toners and a primary transfer roll 16 that transfers toner images of each color component formed on the photoreceptor 11 to the intermediate transfer belt 15 by the primary transfer portion 10.

Around the photoreceptor 11, there are provided a photoreceptor cleaner 17 that removes the residual toner on

the photoreceptor 11 and devices for electrophotography, such as the charger 12, the laser exposure machine 13, the developing machine 14, the primary transfer roll 16, and the photoreceptor cleaner 17, that are disposed in sequence along the rotation direction of the photoreceptor 11. These image forming units 1Y, 1M, 1C, and 1K are substantially linearly arranged in order of yellow (Y), magenta (M), cyan (C), and black (K) from the upstream side of the intermediate transfer belt 15.

By various rolls, the intermediate transfer belt 15 is driven to circulate (rotate) in the direction of an arrow B shown in Fig. 1 at a speed fit for the purpose. The image forming apparatus 100 has, as the various rolls, a driving roll 31 that is driven by a motor (not shown in the drawing) excellent in maintaining a constant speed and rotates the intermediate transfer belt 15, a support roll 32 that supports the intermediate transfer belt 15 substantially linearly extending along the arrangement direction of each photoreceptor 11, a tension applying roll 33 that applies tension to the intermediate transfer belt 15 and functions as a correcting roll preventing meandering of the intermediate transfer belt 15, a back roll 25 that is provided in the secondary transfer portion 20, and a cleaning back roll 34 that is provided in a cleaning portion scrapping off the residual toner on the intermediate transfer belt 15.

The primary transfer portion 10 is configured with the primary transfer roll 16 that is arranged to face the photoreceptor 11 across the intermediate transfer belt 15. The primary transfer roll 16 is arranged to be pressed on the photoreceptor 11 across the intermediate transfer belt 15, and a voltage (primary transfer bias) with a polarity opposite to the charging polarity (negative polarity, the same applies hereinafter) of the toner is applied to the primary transfer roll 16. As a result, the toner image on each photoreceptor 11 is sequentially electrostatically sucked onto the intermediate transfer belt 15, which leads to the formation of overlapped toner images on the intermediate transfer belt 15.

The secondary transfer portion 20 is configured to include the back roll 25 and a secondary transfer roll 22 that is arranged on a toner image-holding surface side of the intermediate transfer belt 15.

The back roll 25 is formed such that the surface resistivity thereof is $1 \times 10^7$ Ω/□ or more and $1 \times 10^{10}$ Ω/□ or less. The hardness of the back roll 25 is set to, for example, 70° (ASKER C: manufactured by KOBUNSHI KEIKI CO., LTD., the same shall apply hereinafter). The back roll 25 is arranged on the back surface side of the intermediate transfer belt 15 to configure a counter electrode of the secondary transfer roll 22. A power supply roll 26 made of a metal to which secondary transfer bias is stably applied is arranged to come into contact with the back roll 25.

On the other hand, the secondary transfer roll 22 is a cylindrical roll having a volume resistivity of $10^{7.5}$ Ω·cm or more and $10^{8.5}$ Ω·cm or less. The secondary transfer roll 22 is arranged to be pressed on the back roll 25 across the intermediate transfer belt 15. The secondary transfer roll 22 is grounded such that the secondary transfer bias is formed between the secondary transfer roll 22 and the back roll 25, which induces secondary transfer of the toner image onto the paper K transported to the secondary transfer portion 20.

On the downstream side of the secondary transfer portion 20 of the intermediate transfer belt 15, an intermediate transfer belt cleaning member 35 separable from the intermediate transfer belt 15 is provided which removes the residual toner or paper powder on the intermediate transfer belt 15 remaining after the secondary transfer and cleans the outer peripheral surface of the intermediate transfer belt 15.

On the downstream side of the secondary transfer portion 20 of the secondary transfer roll 22, a secondary transfer roll cleaning member 22A is provided which removes the residual toner or paper powder on the secondary transfer roll 22 remaining after the secondary transfer and cleans the outer peripheral surface of the intermediate transfer belt 15. Examples of the secondary transfer roll cleaning member 22A include a cleaning blade. The secondary transfer roll cleaning member 22A may be a cleaning roll.

The intermediate transfer belt 15, the primary transfer roll 16, the secondary transfer roll 22, and the intermediate transfer belt cleaning member 35 correspond to an example of the transfer device.

The image forming apparatus 100 may have a configuration in which the apparatus includes a secondary transfer belt (an example of a secondary transfer member) instead of the secondary transfer roll 22. Specifically, as shown in Fig. 2, the image forming apparatus 100 may include a secondary transfer device including a secondary transfer belt 23, a driving roll 23A that is arranged to face the back roll 25 via the secondary transfer belt 23 and the intermediate transfer belt 15, and an idler roll 23B that allows the secondary transfer belt 23 to be stretched thereon in cooperation with the driving roll 23A.

On the other hand, on the upstream side of the yellow image forming unit 1Y, a reference sensor (home position sensor) 42 is disposed which generates a reference signal to be a reference for taking the image forming timing in each of the image forming units 1Y, 1M, 1C, and 1K. On the downstream side of the black image forming unit 1K, an image density sensor 43 for adjusting image quality is disposed. The reference sensor 42 recognizes a mark provided on the back side of the intermediate transfer belt 15 and generates a reference signal. Each of the image forming units 1Y, 1M, 1C, and 1K is configured such that these units start to form images according to the instruction from the control unit 40 based on the recognition of the reference signal.

The image forming apparatus according to the present exemplary embodiment includes, as transport means for transporting the paper K, a paper storage portion 50 that stores the paper K, a paper feeding roll 51 that takes out and transports the paper K stacked in the paper storage portion 50 at a predetermined timing, a transport roll 52 that transports the paper K transported by the paper feeding roll 51, a transport guide 53 that sends the paper K transported by the

transport roll 52 to the secondary transfer portion 20, a transport belt 55 that transports the paper K transported after going through secondary transfer by the secondary transfer roll 22 to the fixing device 60, and a fixing inlet guide 56 that guides the paper K to the fixing device 60.

Next, the basic image forming process of the image forming apparatus according to the present exemplary embodiment will be described.

In the image forming apparatus according to the present exemplary embodiment, image data output from an image reading device not shown in the drawing, a personal computer (PC) not shown in the drawing, or the like is subjected to image processing by an image processing device not shown in the drawing, and then the image forming units 1Y, 1M, 1C, and 1K perform the image forming operation.

In the image processing device, image processing, such as shading correction, misregistration correction, brightness/color space conversion, gamma correction, or various image editing works such as frame erasing or color editing and movement editing, is performed on the input image data. The image data that has undergone the image processing is converted into color material gradation data of 4 colors, Y, M, C, and K, and is output to the laser exposure machine 13.

In the laser exposure machine 13, according to the input color material gradation data, for example, the photoreceptor 11 of each of the image forming units 1Y, 1M, 1C, and 1K is irradiated with an exposure beam Bm emitted from a semiconductor laser. The surface of each of the photoreceptors 11 of the image forming units 1Y, 1M, 1C, and 1K is charged by the charger 12 and then scanned and exposed by the laser exposure machine 13. In this way, an electrostatic latent image is formed. By each of the image forming units 1Y, 1M, 1C, and 1K, the formed electrostatic latent image is developed as a toner image of each of the colors Y, M, C, and K.

In the primary transfer portion 10 where each photoreceptor 11 and the intermediate transfer belt 15 come into contact with each other, the toner images formed on the photoreceptors 11 of the image forming units 1Y, 1M, 1C, and 1K are transferred onto the intermediate transfer belt 15. More specifically, in the primary transfer portion 10, by the primary transfer roll 16, a voltage (primary transfer bias) with a polarity opposite to the charging polarity (negative polarity) of the toner is applied to the substrate of the intermediate transfer belt 15, and the toner images are sequentially overlapped on the outer peripheral surface of the intermediate transfer belt 15 and subjected to primary transfer.

After the primary transfer by which the toner images are sequentially transferred to the outer peripheral surface of the intermediate transfer belt 15, the intermediate transfer belt 15 moves, and the toner images are transported to the secondary transfer portion 20. In a case where the toner images are transported to the secondary transfer portion 20, in the transport means, the paper feeding roll 51 rotates in accordance with the timing at which the toner images are transported to the secondary transfer portion 20, and the paper K having the target size is fed from the paper storage portion 50. The paper K fed from the paper feeding roll 51 is transported by the transport roll 52, passes through the transport guide 53, and reaches the secondary transfer portion 20. Before reaching the secondary transfer portion 20, the paper K is temporarily stopped, and a positioning roll (not shown in the drawing) rotates according to the movement timing of the intermediate transfer belt 15 holding the toner images, so that the position of the paper K is aligned with the position of the toner images.

In the secondary transfer portion 20, via the intermediate transfer belt 15, the secondary transfer roll 22 is pressed on the back roll 25. At this time, the paper K transported at the right timing is interposed between the intermediate transfer belt 15 and the secondary transfer roll 22. At this time, in a case where a voltage (secondary transfer bias) with the same polarity as the charging polarity (negative polarity) of the toner is applied from the power supply roll 26, a transfer electric field is formed between the secondary transfer roll 22 and the back roll 25. In the secondary transfer portion 20 pressed by the secondary transfer roll 22 and the back roll 25, the unfixed toner images held on the intermediate transfer belt 15 are electrostatically transferred onto the paper K in a batch.

Thereafter, the paper K to which the toner images are electrostatically transferred is transported in a state of being peeled off from the intermediate transfer belt 15 by the secondary transfer roll 22, and is transported to the transport belt 55 provided on the downstream side of the secondary transfer roll 22 in the paper transport direction. The transport belt 55 transports the paper K to the fixing device 60 according to the optimum transport speed in the fixing device 60. The unfixed toner images on the paper K transported to the fixing device 60 are fixed on the paper K by being subjected to a fixing treatment by heat and pressure by the fixing device 60. Then, the paper K on which a fixed image is formed is transported to an ejected paper-storing portion (not shown in the drawing) provided in an output portion of the image forming apparatus.

Meanwhile, after the transfer to the paper K is finished, the residual toner remaining on the intermediate transfer belt 15 is transported to the cleaning portion as the intermediate transfer belt 15 rotates, and is removed from the intermediate transfer belt 15 by the cleaning back roll 34 and an intermediate transfer belt cleaning member 35.

Hitherto, the present exemplary embodiment has been described. However, the present exemplary embodiment is not limited to the above exemplary embodiments, and various modifications, changes, and ameliorations can be added thereto.

Examples

Examples of the present invention will be described below, but the present invention is not limited to the following examples. In the following description, all "parts" and "%" are in terms of mass unless otherwise specified.

<Preparation of Polyamic Acid Solution>

(Preparation of Polyamic Acid Solution DA-A1)

As a diamine compound, 83.48 g (416.9 mmol) of 4,4'-diaminodiphenyl ether (hereinafter, abbreviated to "ODA") is added to 800 g of N-methyl-2-pyrrolidone (hereinafter, abbreviated to "NMP") and dissolved while being stirred at room temperature (25°C).

Next, as tetracarboxylic dianhydride, 116.52 g (396.0 mmol) of 3,3',4,4'-biphenyltetracarboxylic dianhydride (hereinafter abbreviated to "BPDA") is slowly added thereto. After the addition and dissolution of the tetracarboxylic dianhydride, the temperature of the reaction solution is raised to 60°C, and then a polymerization reaction is carried out for 20 hours in a state where the reaction temperature is maintained, thereby obtaining a reaction solution containing the polyamic acid DA-A1 and NMP.

The obtained reaction solution is filtered using a #800 stainless steel mesh and cooled to room temperature (25°C), thereby obtaining a polyamic acid solution DA-A1 having a solution viscosity of 2.0 Pa·s at 25°C.

The solution viscosity of the polyamic acid solution is a value measured using an E-type rotary viscometer TV-20H manufactured by TOKISANGYO with a standard rotor (1°34 " × R24) under the conditions of measurement temperature: 25°C and rotation speed: 0.5 rpm (100 Pa·s or more) and 1 rpm (less than 100 Pa·s).

(Preparation of Polyamic Acid Solution DC-A1)

A polyamic acid solution DC-A1 containing the polyamic acid DC-A1 and NMP and having a solution viscosity of 6.0 Pa·s is obtained in the same manner as in Synthesis Example 1, except that the amount of ODA is changed to 79.57 g (397.4 mmol) and the amount of BPDA is changed to 120.43 g (409.3 mmol).

<Example 1>

· Polyamic acid solution DA-A1 (concentration of solid content: 45% by mass) 88 parts by mass as solid content
· Polyamic acid solution DC-A1 (concentration of solid content: 15% by mass) 12 parts by mass as solid content
· Carbon black (dry state; conductive carbon particles)
[Color Black FW200, manufactured by Orion Engineered Carbons S.A., gas black (that is, channel black), number average primary particle diameter: 13 nm, pH: 3.0 (hereinafter abbreviated to "FW200")] 20 parts by mass
· Aralkyl-modified silicone oil (KF410, manufactured by Shin-Etsu Chemical Co., Ltd.) having a benzene ring as modified silicone oil 6 parts by mass
· Epoxy-modified silicone oil (BYK1760, manufactured by BYK Japan KK) as epoxide derivative 1.2 parts by mass (parts by mass corresponding to 20% by mass of the amount of modified silicone oil)

The polyamic acid solution DA-A1 and the polyamic acid solution DC-A1 having the above-described compositions are mixed, and the modified silicone oil and the epoxide derivative are added thereto together with FW200 and subjected to a dispersion treatment with a Paul mill at 30°C for 12 hours, thereby dispersing the mixture in the polyamic acid solution. Thereafter, the mixed liquid in which FW200 is dispersed is filtered through a #800 stainless mesh to obtain a coating liquid.

As a material to be coated, a cylindrical mold made of SUS material having an outer diameter of 366 mm and a length of 400 mm is prepared, a silicone-based mold release agent (product name: SEPA-COAT SP, manufactured by Shin-Etsu Chemical Co., Ltd.) is applied to an outer peripheral surface of the mold, and a drying treatment (a treatment with the mold release agent) is performed.

While rotating the cylindrical mold treated with the mold release agent in the circumferential direction at a speed of 10 rpm, the coating liquid is discharged from a dispenser having a diameter of 1.0 mm from the end portion of the cylindrical mold, and coating is performed by pressing the coating liquid with a metal blade installed on the mold at a uniform pressure. The dispenser unit is moved in the axial direction of the cylindrical mold at a speed of 100 mm/min such that the coating liquid is spirally applied to the cylindrical mold, thereby forming a coating film.

Next, a drying treatment is performed on the coating film in a drying furnace at 140°C in an air atmosphere while

rotating the coating film at 10 rpm for 15 minutes. The integral average heating rate A/B of the coating film in the drying step is 6.00°C/min.

Next, the cylindrical mold is placed in an oven set to an end temperature of 320°C for 4 hours, thereby obtaining an endless belt. The total film thickness of the endless belt (that is, the film thickness of the single layer) is 80 μm.

The endless belt is removed from the mold, the collected endless belt is stretched on a holder and cut with a cutter whose insertion angle is adjusted, thereby obtaining an endless belt having φ366 mm and a width of 369 mm.

<Examples A2 to A12, Comparative Examples A1 and A2, Examples B1 to B12, and Comparative Examples B1 and B2>

An endless belt is obtained in the same manner as in Example 1, except that the composition of the coating liquid is changed according to Tables 1 and 2.

<Evaluation>

The following evaluations are performed for the endless belts of each example.

(Generation of Air Bubbles)

The outer peripheral surface of the endless belt of each example is observed with a loupe, and the size and the number of air bubbles observed on the outer peripheral surface of the endless belt are evaluated according to the following standard.

The observation region of the outer peripheral surface of the endless belt is set to the region of the entire circumference of the endless belt.

S: No air bubbles are generated, or the maximum diameter of the observed air bubbles is 0.3 mm or less and the number of air bubbles is 5 or less.

A: The maximum diameter of the observed air bubbles is 0.3 mm or less, and the number of air bubbles is 6 or more and 10 or less.

B: The maximum diameter of the observed air bubbles is 0.3 mm or less and the number of air bubbles is 11 or more and 15 or less, or the maximum diameter of the observed air bubbles is 0.4 to 0.6 mm and the number of air bubbles is 1 or more and 8 or less.

C: The maximum diameter of the observed air bubbles is 0.3 mm or less and the number of air bubbles is 16 or more, the maximum diameter of the observed air bubbles is 0.4 mm or more and 0.6 mm or less and the number of air bubbles is 9 or more, or the maximum diameter of the observed air bubbles is 0.8 mm or more and the number of air bubbles is 1 or more and 3 or less.

D: The maximum diameter of the observed air bubbles is 0.3 mm or less and the number of air bubbles is 16 or more, the maximum diameter of the observed air bubbles is 0.4 mm or more and 0.6 mm or less and the number of air bubbles is 9 or more, or the maximum diameter of the observed air bubbles is 0.8 mm or more and the number of air bubbles is 4 or more.

(Adhesion Characteristics)

The adhesion characteristics described above are measured for the endless belt of each example. It is noted that the numerical value in the column of the adhesion characteristics in the table indicates the blowing pressure of air in a case where all the polyester resin particles that have adhered to the outer peripheral surface of the endless belt are separated from the outer peripheral surface. Then, evaluation is performed based on the following evaluation standard.

S: air blowing pressure ≤ 10 kPa

A: 10 kPa < air blowing pressure ≤ 13 kPa

B: 13 kPa < air blowing pressure ≤ 16 kPa

C: 16 kPa < air blowing pressure ≤ 19 kPa

D: 20 kPa < air blowing pressure

(Transferability)

The endless belt of each Example is mounted as an intermediate transfer belt on an image forming apparatus "Apeos C7070" for evaluation.

The transferability of the intermediate transfer belt are evaluated as follows using the image forming apparatus for evaluation.

The image is output as a Cyan solid image having a density of 100%, and a hard stop is performed at the end of the transfer step. The toner weight on the two positions of the intermediate transfer body is transferred onto the tape, and the toner-adhered tape weight is measured. After the tape weight is subtracted, the weights are averaged to obtain an amount a of the transferred toner. Similarly, the amount b of the toner remaining on the photoreceptor is obtained. Then, the transfer efficiency is determined by the following equation.

$$\cdot\ \text{Equation: transfer efficiency}\ \eta\ (\%) = a \times 100 / (a + b)$$

The evaluation standard is as follows.

S: Transfer efficiency η is 97% or more.
A: Transfer efficiency η is 95% or more and less than 97%.
B: Transfer efficiency η is 93% or more and less than 95%.
C: Transfer efficiency η is 91% or more and less than 93%.
D: Transfer efficiency η is less than 91%.

The results are shown in Tables 1 and 2. Details of the abbreviations and the like in Table 1 are as follows.

CB: carbon black (dry state; conductive carbon particles) [Color Black FW200, manufactured by Orion Engineered Carbons S.A., gas black (that is, channel black), number average primary particle diameter: 13 nm, pH: 3.0]
Modified Si-Oil: modified silicone oil
KF410: aralkyl-modified silicone oil having a benzene ring (KF410, manufactured by Shin-Etsu Chemical Co., Ltd.)
KP126: polyether-modified silicone oil (KP126, manufactured by Shin-Etsu Chemical Co., Ltd.)
BYK1760: epoxy-modified silicone oil (BYK1760, manufactured by BYK Japan KK)
X-22-1877: aralkyl-modified silicone oil having a benzene ring (X-22-1877, manufactured by Shin-Etsu Chemical Co., Ltd.)
BYK-307: polyether-modified silicone oil (BYK-307, manufactured by BYK Japan KK)
KF101: epoxy-modified silicone oil (KF101, manufactured by Shin-Etsu Chemical Co., Ltd.)
X-22-2426: methacrylic-modified silicone oil (X-22-2246, manufactured by Shin-Etsu Chemical Co., Ltd.)

[Table 1]

| | Polyamic acid solution | | | | | | | | | | | |
|---|---|---|---|---|---|---|---|---|---|---|---|---|
| | DC-A1 | DC-A1 | CB | Modified Si-Oil | | Epoxide derivative (or other antifoaming agents) | | | Air bubble generation | Adhesion characteristics | | Transferability |
| | Parts by mass (solid content) | Parts by mass (solid content) | Parts by mass | Kind | Parts by mass | Kind | (% by mass with respect to Si-Oil) | Parts by mass | | Evaluation | Blowing pressure kPa | |
| Example A1 | 88 | 12 | 20 | KF410 | 6 | BYK1760 | 20% | 1.2 | B | S | 7 | S |
| Example A2 | 88 | 12 | 20 | KF410 | 4 | BYK1760 | 20% | 0.8 | B | S | 8 | S |
| Example A3 | 88 | 12 | 20 | KF410 | 4 | BYK1760 | 3% | 0.12 | B | A | 11 | A |
| Example A4 | 88 | 12 | 20 | KF410 | 4 | BYK1760 | 5% | 0.2 | A | A | 11 | A |
| Example A5 | 88 | 12 | 20 | KF410 | 4 | BYK1760 | 15% | 0.6 | A | S | 9 | S |
| Example A6 | 88 | 12 | 20 | KF410 | 1 | BYK1760 | 15% | 0.15 | S | A | 12 | A |
| Example A7 | 88 | 12 | 20 | KF410 | 0.5 | BYK1760 | 15% | 0.075 | S | B | 15 | B |
| Example A8 | 88 | 12 | 20 | KF410 | 8 | BYK1760 | 25% | 2 | C | S | 8 | S |
| Example A9 | 88 | 12 | 20 | KF410 | 8 | BYK1760 | 1% | 0.08 | C | S | 10 | S |
| Example A10 | 88 | 12 | 20 | KF410 | 0.3 | BYK1760 | 1% | 0.003 | S | C | 18 | C |
| Example A11 | 88 | 12 | 20 | X-22-1877 | 4 | BYK1760 | 5% | 0.2 | A | A | 12 | A |
| Example A12 | 88 | 12 | 20 | KF410 | 4 | KF101 | 5% | 0.2 | A | A | 11 | A |
| Comparative Example A1 | 88 | 12 | 20 | KP126 | 6 | X-22-2426 | 5% | 0.3 | D | A | 11 | A |
| Comparative Example A2 | 88 | 12 | 20 | None | - | None | None | - | S | D | 21 | D |

[Table 2]

| | Polyamic acid solution | | | | | | | | | | | |
|---|---|---|---|---|---|---|---|---|---|---|---|---|
| | DC-A1 | DC-A1 | CB | Modified Si-Oil | | Epoxide derivative (or other antifoaming agents) | | | Air bubble generation | Adhesion characteristics | | Transferability |
| | Parts by mass (solid content) | Parts by mass (solid content) | Parts by mass | Kind | Parts by mass | Kind | (% by mass with respect to Si-Oil) | Parts by mass | | Evaluation | Blowing pressure kPa | |
| Example B1 | 88 | 12 | 20 | KP126 | 6 | BYK1760 | 20% | 1.2 | B | S | 8 | S |
| Example B2 | 88 | 12 | 20 | KP126 | 4 | BYK1760 | 20% | 0.8 | B | S | 9 | S |
| Example B3 | 88 | 12 | 20 | KP126 | 4 | BYK1760 | 3% | 0.12 | B | A | 12 | A |
| Example B4 | 88 | 12 | 20 | KP126 | 4 | BYK1760 | 5% | 0.2 | A | A | 12 | A |
| Example B5 | 88 | 12 | 20 | KP126 | 4 | BYK1760 | 15% | 0.6 | A | S | 10 | S |
| Example B6 | 88 | 12 | 20 | KP126 | 1 | BYK1760 | 15% | 0.15 | S | A | 13 | A |
| Example B7 | 88 | 12 | 20 | KP126 | 0.5 | BYK1760 | 15% | 0.075 | S | B | 16 | B |
| Example B8 | 88 | 12 | 20 | KP126 | 8 | BYK1760 | 25% | 2 | C | S | 8 | S |
| Example B9 | 88 | 12 | 20 | KP126 | 8 | BYK1760 | 1% | 0.08 | C | S | 10 | S |
| Example B10 | 88 | 12 | 20 | KP126 | 0.3 | BYK1760 | 1% | 0.003 | S | C | 18 | C |
| Example B11 | 88 | 12 | 20 | BYK307 | 4 | BYK1760 | 5% | 0.2 | A | A | 11 | A |
| Example B12 | 88 | 12 | 20 | KF410 | 4 | KF101 | 5% | 0.2 | A | A | 13 | A |
| Comparative Example B1 | 88 | 12 | 20 | KP126 | 6 | X-22-2426 | 5% | 0.3 | D | A | 12 | A |
| Comparative Example B2 | 88 | 12 | 20 | None | None | None | None | - | S | D | 21 | D |

From the above results, the endless belts of the present examples have a small number of air bubbles and have excellent transferability and adhesion characteristics as compared with the endless belts of the comparative examples.
As a result, it can be seen that the endless belts of the present examples are endless belts having a small number of air bubbles and a reduced peeling force on the surface.
For the above-described exemplary embodiment, the following supplementary notes will be further disclosed.

(((1))) An endless belt comprising:

a binder resin;

at least one modified silicone oil of a modified silicone oil having a benzene ring or a polyether-modified silicone oil; and

an epoxide derivative.

(((2))) The endless belt according to (((1))),
wherein a content of the modified silicone oil with respect to 100 parts by mass of the binder resin is 0.5 parts by mass or more and 6.0 parts by mass or less.
(((3))) The endless belt according to (((2))),
wherein the content of the modified silicone oil with respect to 100 parts by mass of the binder resin is 1.0 parts by mass or more and 4.0 parts by mass or less.
(((4))) The endless belt according to any one of (((1))) to (((3))),
wherein a content of the epoxide derivative with respect to the modified silicone oil is 3% by mass or more and 20% by mass or less.
(((5))) The endless belt according to (((4))),
wherein the content of the epoxide derivative with respect to the modified silicone oil is 5% by mass or more and 15% by mass or less.
(((6))) The endless belt according to any one of (((1))) to (((5))),
wherein the epoxide derivative is an epoxy-modified silicone oil.
(((7))) The endless belt according to any one of (((1))) to (((6))),
wherein, when air is blown to an outer peripheral surface while increasing a blowing pressure from an upper side of the outer peripheral surface after polyester resin particles having a volume average particle diameter of 4.7 μm are caused to adhere to the outer peripheral surface at a load of 0 g/cm$^2$, all the polyester resin particles that have adhered to the outer peripheral surface are separated from the outer peripheral surface in a case where the blowing pressure is within 16 kPa.
(((8))) An intermediate transfer belt comprising:
the endless belt according to any one of (((1))) to (((7)))
(((9))) A transfer device comprising:

an intermediate transfer belt that is an intermediate transfer belt having an outer peripheral surface to which a toner image is transferred, and has the endless belt according to any one of (((1))) to (((7)));
a primary transfer device that has a primary transfer member performing primary transfer of a toner image formed on a surface of an image holder to the outer peripheral surface of the intermediate transfer belt; and
a secondary transfer device that has a secondary transfer member which is arranged in contact with the outer peripheral surface of the intermediate transfer belt and performs secondary transfer of the toner image transferred to the outer peripheral surface of the intermediate transfer belt to a surface of a recording medium.

(((10))) An image forming apparatus comprising:

a toner image forming device that has an image holder and forms a toner image on a surface of the image holder; and
the transfer device according to (((9))) that is a transfer device transferring the toner image formed on the surface of the image holder to a surface of a recording medium.

The effects of the above-described appendices are as follows.
According to (((1))), an endless belt having a small number of air bubbles and a reduced peeling force on the surface is provided as compared with an endless belt including a binder resin, at least one modified silicone oil of a modified silicone oil having a benzene ring or a polyether-modified silicone oil, and a methacrylic-modified silicone oil as an

antifoaming agent.

According to (((2))), the endless belt having a small number of bubbles and a reduced peeling force on the surface is provided as compared with a case where the content of the modified silicone oil with respect to 100 parts by mass of the binder resin is less than 0.5 parts by mass or more than 6.0 parts by mass.

According to (((3))), the endless belt having a small number of air bubbles and a reduced peeling force on the surface is provided as compared with a case where the content of the modified silicone oil with respect to 100 parts by mass of the binder resin is less than 1.0 parts by mass or more than 4.0 parts by mass.

According to (((4))), the endless belt having a small number of air bubbles and a reduced peeling force on the surface is provided as compared with a case where the content of the epoxide derivative with respect to the modified silicone oil is less than 3% by mass or more than 20% by mass.

According to (((5))), the endless belt having a small number of bubbles and a reduced peeling force on the surface is provided as compared with a case where the content of the epoxide derivative with respect to the modified silicone oil is less than 5% by mass or more than 15% by mass.

According to (((6))), an endless belt including an epoxy-modified silicone oil as the epoxide derivative and having a small number of air bubbles and a reduced peeling force on the surface is provided as compared with an endless belt including a binder resin, at least one modified silicone oil of a modified silicone oil having a benzene ring or a polyether-modified silicone oil, and a methacrylic-modified silicone oil as an antifoaming agent.

According to (((7))), the endless belt having a small number of bubbles and a reduced peeling force on the surface is provided as compared with a case where all the polyester resin particles that have adhered to the outer peripheral surface are separated from the outer peripheral surface in a case where a case where the blowing pressure is more than 6 kPa.

According to (((8))), (((9))), or (((10))), an intermediate transfer belt having a small number of air bubbles and excellent transferability, or a transfer device or an image forming apparatus including the intermediate transfer belt is provided as compared with a case where an endless belt including a binder resin, at least one modified silicone oil of a modified silicone oil having a benzene ring or a polyether-modified silicone oil, and a methacrylic-modified silicone oil as an antifoaming agent is applied.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Brief Description of the Reference Symbols

1Y, 1M, 1C, 1K: image forming unit
10: primary transfer portion
11: photoreceptor
12: charger
13: laser exposure machine
14: developing machine
15: intermediate transfer belt
16: primary transfer roll
17: photoreceptor cleaner
20: secondary transfer portion
22: secondary transfer roll
22A: secondary transfer roll cleaning member
25: back roll
26: power supply roll
31: driving roll
32: support roll
33: tension applying roll
34: cleaning back roll
35: intermediate transfer belt cleaning member
40: control unit

42: reference sensor
43: image density sensor
50: paper storage portion
51: paper feeding roll
52: transport roll
53: transport guide
55: transport belt
56: fixing inlet guide
60: fixing device
100: image forming apparatus

**Claims**

1. An endless belt comprising:

   a binder resin;
   at least one modified silicone oil of a modified silicone oil having a benzene ring or a polyether-modified silicone oil; and
   an epoxide derivative.

2. The endless belt according to claim 1, wherein a content of the modified silicone oil with respect to 100 parts by mass of the binder resin is 0.5 parts by mass or more and 6.0 parts by mass or less.

3. The endless belt according to claim 2, wherein the content of the modified silicone oil with respect to 100 parts by mass of the binder resin is 1.0 parts by mass or more and 4.0 parts by mass or less.

4. The endless belt according to any one of claims 1 to 3, wherein a content of the epoxide derivative with respect to the modified silicone oil is 3% by mass or more and 20% by mass or less.

5. The endless belt according to claim 4, wherein the content of the epoxide derivative with respect to the modified silicone oil is 5% by mass or more and 15% by mass or less.

6. The endless belt according to any one of claims 1 to 5, wherein the epoxide derivative is an epoxy-modified silicone oil.

7. The endless belt according to any one of claims 1 to 6, wherein, when air is blown to an outer peripheral surface while increasing a blowing pressure from an upper side of the outer peripheral surface after polyester resin particles having a volume average particle diameter of 4.7 $\mu$m are caused to adhere to the outer peripheral surface at a load of 0 g/cm$^2$, all the polyester resin particles that have adhered to the outer peripheral surface are separated from the outer peripheral surface in a case where the blowing pressure is within 16 kPa.

8. An intermediate transfer belt comprising: the endless belt according to any one of claims 1 to 7.

9. A transfer device comprising:

   an intermediate transfer belt that is an intermediate transfer belt having an outer peripheral surface to which a toner image is transferred, and has the endless belt according to any one of claims 1 to 7;
   a primary transfer device that has a primary transfer member performing primary transfer of a toner image formed on a surface of an image holder to the outer peripheral surface of the intermediate transfer belt; and
   a secondary transfer device that has a secondary transfer member which is arranged in contact with the outer peripheral surface of the intermediate transfer belt and performs secondary transfer of the toner image

transferred to the outer peripheral surface of the intermediate transfer belt to a surface of a recording medium.

**10.** An image forming apparatus comprising:

a toner image forming device that has an image holder and forms a toner image on a surface of the image holder; and

the transfer device according to claim 9 that is a transfer device transferring the toner image formed on the surface of the image holder to a surface of a recording medium.

FIG. 1

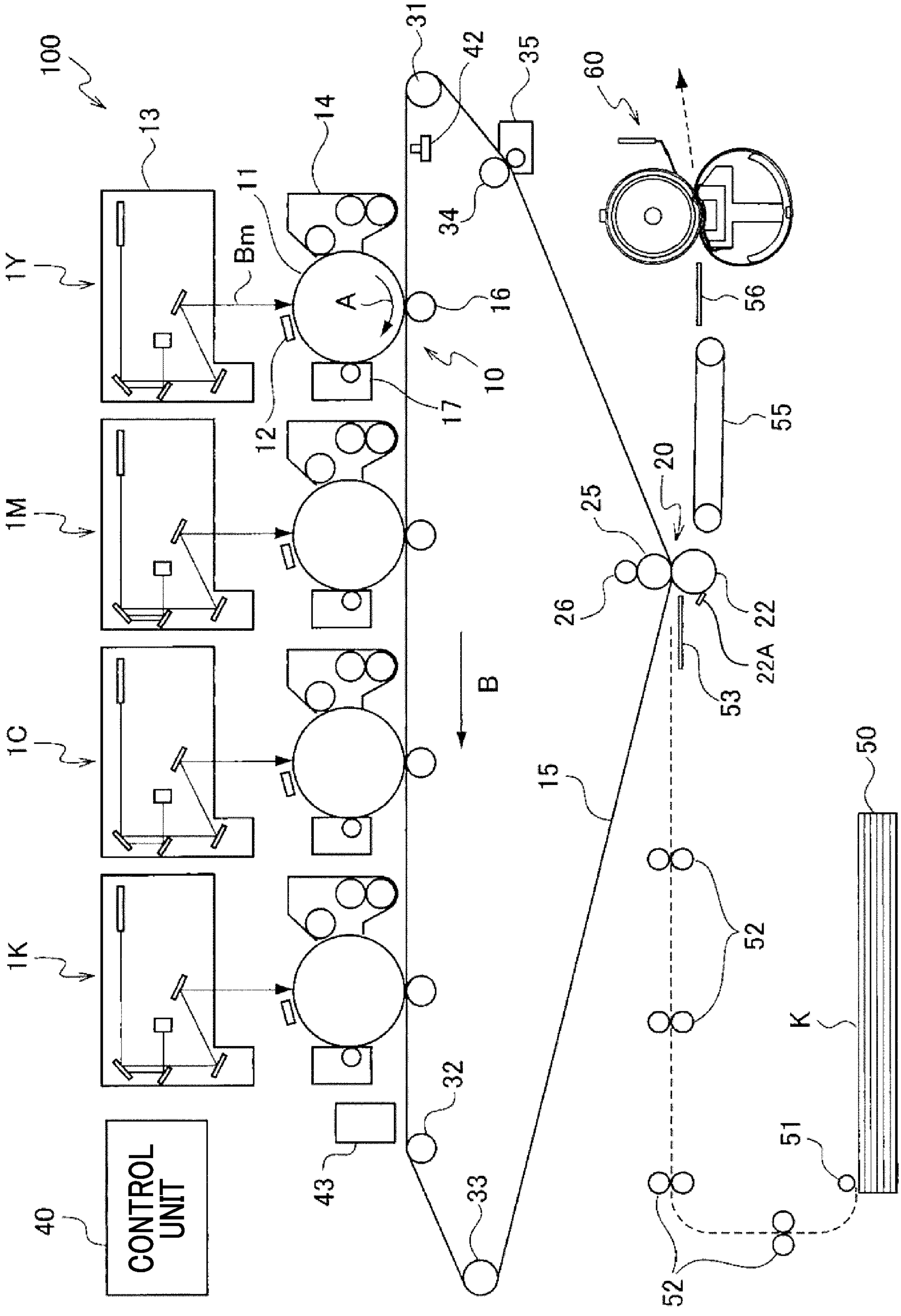
CONTROL UNIT
100
1Y
1M
1C
1K
13
14
11
Bm
A
12
16
17
10
31
42
35
34
60
56
55
20
25
26
22
22A
53
B
15
50
52
K
51
32
33
43
40

FIG. 2

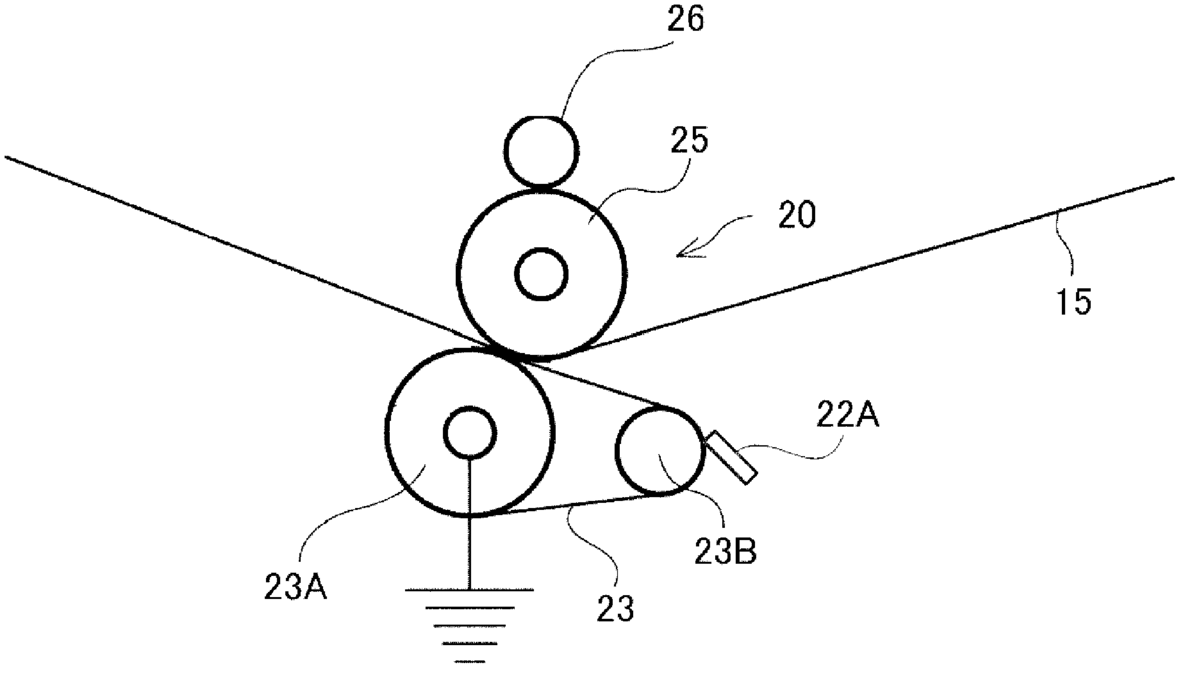

Europäisches Patentamt
European Patent Office
Office européen des brevets

# EUROPEAN SEARCH REPORT

Application Number
EP 25 15 9582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | JP 5 162911 B2 (MITSUBISHI CHEM CORP; YUKA DENSHI CO LTD) 13 March 2013 (2013-03-13)<br>* paragraph [0024] - paragraph [0231] *<br>----- | 1-5,7-10<br>6 | INV.<br>G03G15/16 |
| X | JP 5 882844 B2 (BRIDGESTONE CORP) 9 March 2016 (2016-03-09)<br>* paragraph [0006] - paragraph [0110]; figures 2-3 *<br>----- | 1,7-10 | |
| X | US 2016/209781 A1 (HONYA AKIHIRO [JP] ET AL) 21 July 2016 (2016-07-21)<br>* paragraph [0021] - paragraph [0157]; figure 1 *<br>----- | 1,7-10 | |
| A | JP 2011 017858 A (YUKA DENSHI CO LTD) 27 January 2011 (2011-01-27)<br>* paragraph [0005] - paragraph [0231] *<br>----- | 1-10 | |

TECHNICAL FIELDS SEARCHED (IPC)

G03G

The present search report has been drawn up for all claims

2

| Place of search | Date of completion of the search | Examiner |
|---|---|---|
| Munich | 28 July 2025 | Rubio Sierra, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 15 9582

This annex lists the patent family members relating to the patent documents cited in the above-mentioned European search report. The members are as contained in the European Patent Office EDP file on
The European Patent Office is in no way liable for these particulars which are merely given for the purpose of information.

28-07-2025

| Patent document cited in search report | | Publication date | Patent family member(s) | | Publication date |
|---|---|---|---|---|---|
| JP 5162911 | B2 | 13-03-2013 | JP 5162911 | B2 | 13-03-2013 |
| | | | JP 2008180984 | A | 07-08-2008 |
| JP 5882844 | B2 | 09-03-2016 | JP 5882844 | B2 | 09-03-2016 |
| | | | JP 2014006327 | A | 16-01-2014 |
| US 2016209781 | A1 | 21-07-2016 | CN 105807591 | A | 27-07-2016 |
| | | | JP 6102950 | B2 | 29-03-2017 |
| | | | JP 2016133553 | A | 25-07-2016 |
| | | | US 2016209781 | A1 | 21-07-2016 |
| JP 2011017858 | A | 27-01-2011 | JP 5428598 | B2 | 26-02-2014 |
| | | | JP 2011017858 | A | 27-01-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015090454 A
- JP 2017061701 A
- JP 2012068558 A